# EUROPÄISCHE PATENTANMELDUNG

(11) **EP 2 687 700 A2**
(43) Veröffentlichungstag der Anmeldung: **22.01.2014**
(21) Anmeldenummer: 13172076.5
(22) Anmeldetag: 14.06.2013
(51) Int. Cl.: F02B 37/00, F01N 3/20, F02B 75/22

(54) **Abgasaufladungs- und Abgasnachbehandlungsmodul für eine Brennkraftmaschine sowie Brennkraftmaschine**

(30) Priorität: 18.07.2012 DE 102012014144
(71) Anmelder: MAN Diesel & Turbo SE, 86153 Augsburg (DE)
(72) Erfinder: Eppler, Florian, 89349 Burtenbach (DE); Stiesch, Gunnar, 86356 Neusäss (DE); Thum, Dirk, 86152 Augsburg (DE); Schlüter, Stephan, 86153 Augsburg (DE); Brendel, Robert, 86150 Augsburg (DE); Steffe, Petra, 86482 Aystetten (DE); Söngen, Matthias, 86156 Augsburg (DE)

(57) **Zusammenfassung**

Abgasaufladungs- und Abgasnachbehandlungsmodul (10) für eine Brennkraftmaschine, mit mindestens einem Anschluss (14) zum Zuführen von zu entspannendem Abgas in das Abgasaufladungs- und Abgasnachbehandlungsmodul, mit mindestens einem Anschluss (15) zum Abführen von entspanntem Abgas vom Abgasaufladungs- und Abgasnachbehandlungsmodul, mit mindestens einem Anschluss (16) zum Zuführen von zu verdichtender Ladeluft in das Abgasaufladungs- und Abgasnachbehandlungsmodul, mit mindestens einem Anschluss (17) zum Abführen von verdichteter Ladeluft vom Abgasaufladungs- und Abgasnachbehandlungsmodul, mit einem eine Turbine (19) und einen Verdichter (13) umfassenden Abgasturbolader (11) und mit einem SCR-Katalysator (12), wobei das Abgasaufladungs- und Abgasnachbehandlungsmodul (10) als Einheit an eine Brennkraftmaschine koppelbar und als Einheit (10) von der Brennkraftmaschine abkoppelbar ist.

## Beschreibung

Die Erfindung betrifft ein Abgasaufladungs- und Abgasnachbehandlungsmodul für eine Brennkraftmaschine sowie eine Brennkraftmaschine.

Aus der DE 10 2004 027 593 A1 ist eine Brennkraftmaschine mit einer einstufigen oder zweistufigen Abgasaufladung und einer Abgasreinigung über einen SCR-Katalysator bekannt. Bei einer einstufigen Abgasaufladung ist der SCR-Katalysator nach diesem Stand der Technik entweder stromabwärts der Turbine des Abgasturboladers oder stromaufwärts der Turbine des Abgasturboladers positioniert. Bei einer zweistufigen Abgasaufladung mit zwei Abgasturboladern ist der SCR-Katalysator nach diesem Stand der Technik zwischen die beiden Turbinen der beiden Abgasturbolader geschaltet. Ferner ist es aus diesem Stand der Technik bereits bekannt, den SCR-Katalysator über eine Bypassleitung zu umgehen, um Abgas am SCR-Katalysator vorbei in Richtung auf eine stromabwärts des SCR-Katalysators positionierte Turbine eines Abgasturboladers zu leiten. Der Abgasstrom durch diese Bypassleitung ist über eine Verstelleinrichtung einstellbar.

Bei aus der Praxis bekannten Brennkraftmaschinen handelt es sich bei den Baugruppen des Abgasturboladers sowie bei den Baugruppen des SCR-Katalysators um getrennte Baugruppen, die als separate Baugruppen an der Brennkraftmaschine verbaut werden müssen. Hierdurch können abhängig vom zur Verfügung stehenden Bauraum Probleme bei der Platzierung und Anbindung der jeweiligen Baugruppen bzw. Einzelkomponenten entstehen.

Hievon ausgehend liegt der Erfindung die Aufgabe zu Grunde, ein neuartiges Abgasaufladungs- und Abgasnachbehandlungsmodul und eine neuartige Brennkraftmaschine zu schaffen.

Diese Aufgabe wird durch ein Abgasaufladungs- und Abgasnachbehandlungsmodul gemäß Anspruch 1 gelöst.

Das erfindungsgemäße Abgasaufladungs- und Abgasnachbehandlungsmodul verfügt über mindestens einem Anschluss zum Zuführen von zu entspannendem Abgas in das Abgasaufladungs- und Abgasnachbehandlungsmodul, einem Anschluss zum Abführen von entspanntem Abgas vom Abgasaufladungs- und Abgasnachbehandlungsmodul, über mindestens einem Anschluss zum Zuführen von zu verdichtender Ladeluft in das Abgasaufladungs- und Abgasnachbehandlungsmodul, über mindestens einem Anschluss zum Abführen von verdichteter Ladeluft vom Abgasaufladungs- und Abgasnachbehandlungsmodul, über einen eine Turbine und einen Verdichter umfassenden Abgasturbolader und über einen SCR-Katalysator, wobei das Abgasaufladungs- und Abgasnachbehandlungsmodul als Einheit an eine Brennkraftmaschine koppelbar und als Einheit von der Brennkraftmaschine abkoppelbar ist.

Mit der hier vorliegenden Erfindung wird erstmals vorgeschlagen, Baugruppen einer Abgasaufladung und Baugruppen eines SCR-Katalysators zu einem Abgasaufladungs- und Abgasnachbehandlungsmodul zusammen zu fassen. Das Abgasaufladungs- und Abgasnachbehandlungsmodul kann als Einheit an einer Brennkraftmaschine montiert und als Einheit von der Brennkraftmaschine demontiert werden.

Hierdurch kann ein standardisierter Aufbau und eine standardisierte Anordnung für die Baugruppen der Abgasaufladung und der Abgasnachbehandlung an einer Brennkraftmaschine realisiert werden.

Vorzugsweise umfasst das Abgasaufladungs- und Abgasnachbehandlungsmodul weiterhin einen Ladeluftkühler, der zwischen den Verdichter und den Anschluss zum Abführen von verdichteter Ladeluft vom Modul geschaltet ist. Durch die Integration des Ladeluftkühlers in das Abgasaufladungs- und Abgasnachbehandlungsmodul kann der Aufbau und die Anordnung von Komponenten an der Brennkraftmaschine weiter vereinfacht und vereinheitlicht werden.

Nach einer vorteilhaften Weiterbildung der Erfindung weist das Abgasaufladungs- und Abgasnachbehandlungsmodul mehrere optionale Anschlüsse zum Abführen von entspanntem Abgas vom Abgasaufladungs- und Abgasnachbehandlungsmodul in einem Abgaskamin auf. Das Vorsehen mehrerer optionaler Anschlüsse zum Abführen von entspanntem Abgas in einen Abgaskamin erlaubt die Verwendung des Abgasaufladungs- und Abgasnachbehandlungsmoduls in unterschiedlichen Anwendungen, insbesondere in unterschiedlichen Konfigurationen von Schiffen.

Die erfindungsgemäße Brennkraftmaschine ist in Anspruch 6 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine schematisierte Darstellung eines Abgasaufladungs- und Abgasnachbehandlungsmoduls für eine Brennkraftmaschine;
- Fig. 2:: eine schematisierte Darstellung einer ersten Brennkraftmaschine mit einem Abgasaufladungs- und Abgasnachbehandlungsmodul; und
- Fig. 3: eine schematisierte Darstellung einer zweiten Brennkraftmaschine mit einem Abgasaufladungs- und Abgasnachbehandlungsmodul.

Die hier vorliegende Erfindung betrifft ein Abgasaufladungs- und Abgasnachbehandlungsmodul für eine Brennkraftmaschine sowie eine Brennkraftmaschine mit einem solchen Abgasaufladungs- und Abgasnachbehandlungsmodul, wobei es sich bei der Brennkraftmaschine insbesondere um eine mit Schweröl betriebene Schiffsdieselbrennkraftmaschine handelt.

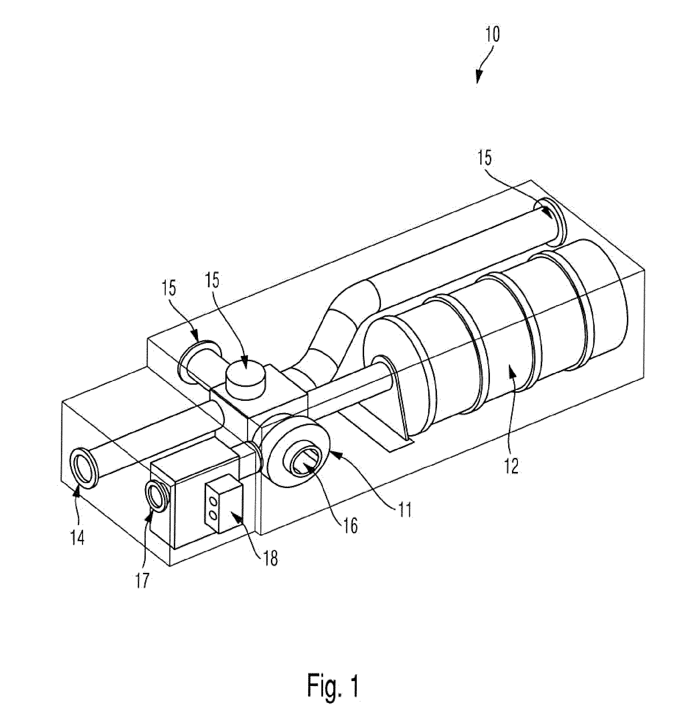

Fig. 1 zeigt eine schematisierte, perspektivische Ansicht eines Abgasaufladungs- und Abgasnachbehandlungsmoduls 10 für eine Brennkraftmaschine, wobei das Abgasaufladungs- und Abgasnachbehandlungsmodul 10 Baugruppen bzw. Komponenten einer Abgasaufladung und Abgasnachbehandlung umfasst. So umfasst das Abgasaufladungs- und Abgasnachbehandlungsmodul 10 einen Abgasturbolader 11 und einen SCR-Katalysator 12. Der Abgasturbolader 11 umfasst eine Turbine 19 und einen Verdichter 13. Die Turbine 19 dient dem Entspannen von Abgas und der Verdichter 13 dient dem Verdichten von Ladeluft.

Das Abgasaufladungs- und Abgasnachbehandlungsmodul 10 des bevorzugten Ausführungsbeispiels der Fig. 1 verfügt über einen Anschluss 14 zum Zuführen von zu entspannendem Abgas in das Abgasaufladungs- und Abgasnachbehandlungsmodul 10. Weiterhin verfügt das Abgasaufladungs- und Abgasnachbehandlungsmodul 10 im gezeigten, bevorzugten Ausführungsbeispiel über mehrere optionale Anschlüsse 15, um entspanntes Abgas vom Abgasaufladungs- und Abgasnachbehandlungsmodul 10 in einen nicht gezeigten Abgaskamin abzuleiten.

Das Abgasaufladungs- und Abgasnachbehandlungsmodul 10 umfasst weiterhin einen Anschluss 16 zum Zuführen von zu verdichtender Ladeluft in das Abgasaufladungs- und Abgasnachbehandlungsmodul 10 und über einen Anschluss 17 zum Abführen von verdichteter Ladeluft vom Abgasaufladungs- und Abgasnachbehandlungsmodul 10.

Zu entspannendes Abgas, welches dem Abgasaufladungs- und Abgasnachbehandlungsmodul über den Anschluss 14 zugeführt wird, ist der Turbine 19 des Abgasturboladers 11 des Abgasaufladungs- und Abgasnachbehandlungsmoduls 10 zuführbar, und zwar entweder unmittelbar oder mittelbar über den SCR-Katalysator 12.

Dann, wenn das zu entspannende Abgas der Turbine 19 des Abgasturboladers 11 unmittelbar zugeführt wird, wird entspanntes Abgas anschließend über den SCR-Katalysator 12 geleitet und anschließend über einen der Anschlüsse 15 vom Abgasaufladungs- und Abgasnachbehandlungsmodul 10 abgeleitet.

Zu verdichtende Ladeluft, die dem Abgasaufladungs- und Abgasnachbehandlungsmodul 10 über den Anschluss 16 zugeführt wird, gelangt in den Bereich des Verdichters 13 des Abgasturboladers 11 und wird in demselben verdichtet, um als verdichtete Ladeluft das Abgasaufladungs- und Abgasnachbehandlungsmodul 10 über den Anschluss 17 zu verlassen.

Die Leitung des Abgases und der Ladeluft zwischen den oben genannten Anschlüssen 14, 15, 16 und 17 und den oben genannten Komponenten, nämlich dem Abgasturbolader 11 und dem SCR-Katalysator 12, erfolgt über Verrohrungen bzw. Leitungen zwischen den jeweiligen Anschlüssen 14, 15, 16 und 17 und dem Abgasturbolader 11 und/oder SCR-Katalysator 12.

Vorzugsweise umfasst das Abgasaufladungs- und Abgasnachbehandlungsmodul 10 weiterhin einen Ladeluftkühler 18, um in dem Verdichter 13 des Abgasturboladers 11 des Abgasaufladungs- und Abgasnachbehandlungsmoduls 10 verdichtete Ladeluft vor dem Ableiten vom Abgasaufladungs- und Abgasnachbehandlungsmodul 10 über den Anschluss 17 abzukühlen.

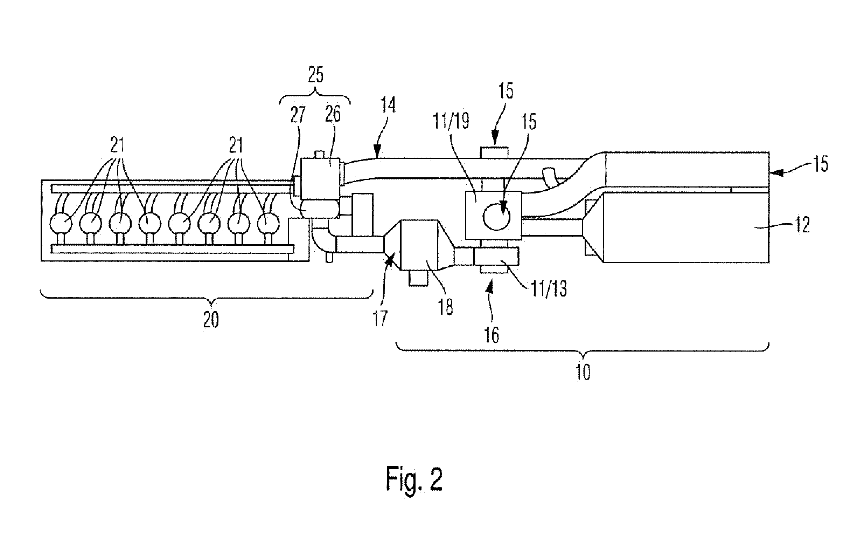

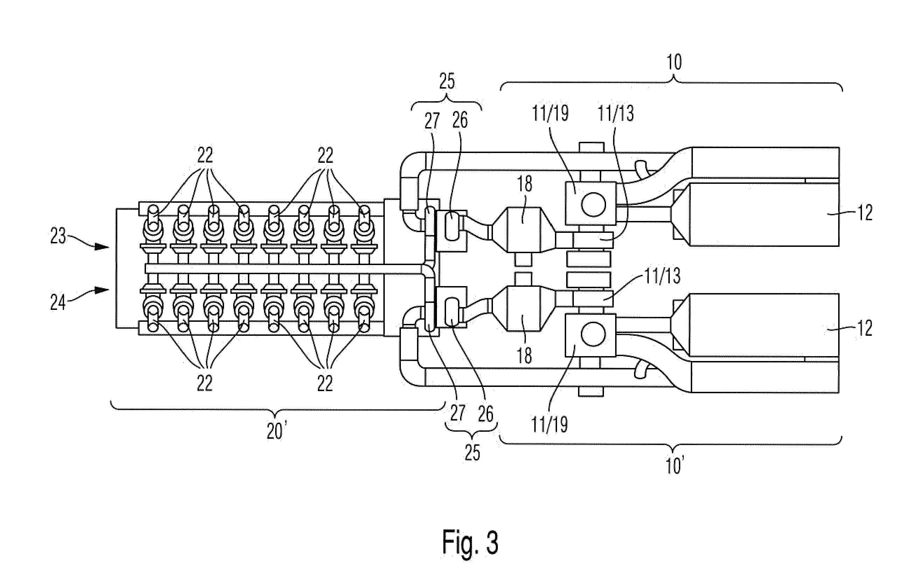

Das Abgasaufladungs- und Abgasnachbehandlungsmodul 10 ist als Einheit an eine Brennkraftmaschine ankoppelbar sowie als Einheit von der Brennkraftmaschine abkoppelbar bzw. als Einheit an einer Brennkraftmaschine montierbar und als Einheit von der Brennkraftmaschine demontierbar. Fig. 2 und 3 zeigen jeweils eine Brennkraftmaschine 20 bzw. 20' mit mindestens einem Abgasaufladungs- und Abgasnachbehandlungsmodul 10 bzw. 10'.

So zeigt Fig. 2 eine Brennkraftmaschine 20 in R-Bauweise, bei welcher sämtliche Zylinder 21 in einer Reihe hintereinander bzw. nebeneinander positioniert sind, wobei eine solche R-Bauweise auch als L-Bauweise bezeichnet wird. Die Brennkraftmaschine 20 in R-Bauweise verfügt über ein einziges Abgasaufladungs- und Abgasnachbehandlungsmodul 10, welches an die Brennkraftmaschine 20 gekoppelt ist. Fig. 3 zeigt eine Brennkraftmaschine in V-Bauweise, bei welcher die Zylinder 22 als Zylinderbänke 23 und 24 gruppiert sind, wobei jeder Zylinderbank 23 und 24 jeweils in Abgasaufladungs- und Abgasnachbehandlungsmodul 10 bzw. 10' zugeordnet ist.

Die Aufladungs- und Abgasnachbehandlungsmodule 10 und 10' der Fig. 3 verfügen über identische Anschlüsse und identische Komponenten, wobei jedoch zur Gewährleistung einer bauraumoptimalen Anbindung der Module 10 und 10' an die Brennkraftmaschine 20' der Fig. 3 die beiden Aufladungs- und Abgasnachbehandlungsmodule 10 und 10' spiegelbildlich aufgebaut sind.

Dabei sind die Abgasaufladungs- und Abgasnachbehandlungsmodule 10, 10' jeweils an einer sogenannten Kupplungsseite der jeweiligen Brennkraftmaschine 20 bzw. 20' verbaut. Im Unterschied hierzu ist es auch möglich, die Abgasaufladungs- und Abgasnachbehandlungsmodule 10 bzw. 10' an einer sogenannten Kupplungsgegenseite der jeweiligen Brennkraftmaschine 20 bzw. 20' zu verbauen, wobei dann jeweils spiegelbildlich aufgebaute Aufladungs- und Abgasnachbehandlungsmodule 10, 10' zum Einsatz kommen.

Das Abgasaufladungs- und Abgasnachbehandlungsmodul 10, 10' der hier vorliegenden Erfindung kann an einer Brennkraftmaschine eine einstufige Abgasaufladung bereitstellen bzw. realisieren, wobei dann der Anschluss 14 zum Zuführen von zu entspannendem Abgas in das jeweilige Modul 10 bzw. 10' mit einem sogenannten Abgassammler der Brennkraftmaschine unmittelbar gekoppelt ist, und wobei dann der Anschluss 17 zum Abführen von verdichteter Ladeluft vom jeweiligen Modul 10 bzw. 10' unmittelbar mit einem sogenannten Ladeluftsammler der Brennkraftmaschine koppelbar ist.

Im Unterschied hierzu ist es auch möglich, dass eine Brennkraftmaschine eine zweistufige Abgasaufladung aufweist, wobei dann der Abgasturbolader 11 des oder jedes Abgasaufladungs- und Abgasnachbehandlungsmoduls 10, 10' eine Niederdruckstufe der Abgasaufladung bereitstellt. In diesem Fall verfügt dann die Brennkraftmaschine über einen weiteren, eine Hochdruckstufe der Abgasaufladung bereitstellenden Abgasturbolader, wobei dann der Anschluss 14 zum Zuführen von zu entspannendem Abgas in das jeweilige Modul 10, 10' mittelbar über eine Turbine des die Hochdruckstufe der Abgasaufladung bereitstellenden Abgasturboladers mit dem Abgassammler der Brennkraftmaschine gekoppelt ist, und wobei der Anschluss 17 zum Abführen von verdichteter Ladeluft vom jeweiligen Modul 10 bzw. 10' mittelbar über einen Verdichter des die Hochdruckstufe der Abgasaufladung bereitstellenden Abgasturboladers mit der Brennkraftmaschine gekoppelt ist.

In Fig. 2 und 3 stellt der Abgasturbolader 11 des jeweiligen Abgasaufladungs- und Abgasnachbehandlungsmoduls 10 bzw. 10' jeweils die Niederdruckstufe der Abgasaufladung bereit, wobei dann zwischen das jeweilige Modul 10 bzw. 10' und die Zylinder der jeweiligen Brennkraftmaschine 20 bzw. 20' jeweils ein weiterer Abgasturbolader 25 geschaltet ist, der dann die jeweilige Hochdruckstufe der Abgasaufladung bereit stellt, wobei dieser weitere Abgasturbolader 25 wiederum einen Verdichter 26 und eine Turbine 27 umfasst.

Mit der hier vorliegenden Erfindung kann ein modularer und standardisierter Aufbau an Brennkraftmaschinen gewährleistet werden, nämlich ein modulartiger und standardisierter Aufbau von Komponenten der Abgasaufladung und der Abgasnachbehandlung. Hiermit kann selbst bei beengten Platzverhältnissen eine gute Anbindung der Komponenten bzw. Baugruppen der Abgasaufladung sowie der Abgasnachbehandlung an die Zylinder der Brennkraftmaschine gewährleistet werden.

Das Abgasaufladungs- und Abgasnachbehandlungsmodul 10, 10' kann an Brennkraftmaschinen unterschiedlicher Bauform, so zum Beispiel bei Brennkraftmaschinen in R-Bauweise oder V-Bauweise, zum Einsatz kommen, wobei eine Anordnung des jeweiligen Abgasaufladungs- und Abgasnachbehandlungsmoduls 10, 10' auf der sogenannten Kupplungsseite und der sogenannten Kupplungsgegenseite der Brennkraftmaschine erfolgen kann.

In das Abgasaufladungs- und Abgasnachbehandlungsmodul 10, 10' sind der Abgasturbolader 11 und der SCR-Katalysator 12 integriert, wobei der Abgasturbolader 11 des jeweiligen Abgasaufladungs- und Abgasnachbehandlungsmoduls 10, 10' entweder eine einstufige Abgasaufladung bereitstellt oder bei einer zweitstufigen Abgasaufladung eine Niederdruckstufe der Abgasaufladung bereitstellt.

### Bezugszeichenliste

- 10: Abgasaufladungs- und Abgasnachbehandlungsmodul
- 10': Abgasaufladungs- und Abgasnachbehandlungsmodul
- 11: Abgasturbolader
- 12: SCR-Katalysator
- 13: Verdichter
- 14: Anschluss
- 15: Anschluss
- 16: Anschluss
- 17: Anschluss
- 18: Ladeluftkühler
- 19: Turbine
- 20: Brennkraftmaschine
- 20': Brennkraftmaschine
- 21: Zylinder
- 22: Zylinder
- 23: Zylinderbank
- 24: Zylinderbank
- 25: Abgasturbolader
- 26: Verdichter
- 27: Turbine

## Patentansprüche

1. Abgasaufladungs- und Abgasnachbehandlungsmodul für eine Brennkraftmaschine, mit mindestens einem Anschluss (14) zum Zuführen von zu entspannendem Abgas in das Abgasaufladungs- und Abgasnachbehandlungsmodul, mit mindestens einem Anschluss (15) zum Abführen von entspanntem Abgas vom Abgasaufladungs- und Abgasnachbehandlungsmodul, mit mindestens einem Anschluss (16) zum Zuführen von zu verdichtender Ladeluft in das Abgasaufladungs- und Abgasnachbehandlungsmodul, mit mindestens einem Anschluss (17) zum Abführen von verdichteter Ladeluft vom Abgasaufladungs- und Abgasnachbehandlungsmodul, mit einem eine Turbine (19) und einen Verdichter (13) umfassenden Abgasturbolader (11) und mit einem SCR-Katalysator (12), wobei das Abgasaufladungs- und Abgasnachbehandlungsmodul als Einheit an eine Brennkraftmaschine koppelbar und als Einheit von der Brennkraftmaschine abkoppelbar ist.

2. Abgasaufladungs- und Abgasnachbehandlungsmodul nach Anspruch 1, **gekennzeichnet durch** Verrohrungen oder Leitungen, über die zu entspannendes Abgas der Turbine (19) des Abgasturboladers (11) zuleitbar ist und/oder über die entspanntes Abgas dem SCR-Katalysator (12) zuleitbar ist und/oder über die zu verdichtende Ladeluft dem Verdichter (13) des Abgasturboladers (11) zuleitbar ist.

3. Abgasaufladungs- und Abgasnachbehandlungsmodul nach Anspruch 1, **gekennzeichnet durch** Verrohrungen oder Leitungen, über die zu entspannendes Abgas dem SCR-Katalysator (12) und der Turbine (19) des Abgasturboladers (11) zuleitbar ist und/oder über die zu verdichtende Ladeluft dem Verdichter (13) des Abgasturboladers (11) zuleitbar ist.

4. Abgasaufladungs- und Abgasnachbehandlungsmodul nach einem der Ansprüche 1 bis 3, **dadurch gekennzeichnet, dass** dasselbe weiterhin einen Ladeluftkühler (18) umfasst, der zwischen den Verdichter (13) und den Anschluss (17) zum Abführen von verdichteter Ladeluft vom Modul geschaltet ist.

5. Abgasaufladungs- und Abgasnachbehandlungsmodul nach einem der Ansprüche 1 bis 4, **dadurch gekennzeichnet, dass** dasselbe mehrere optionale Anschlüsse (15) zum Abführen von entspanntem Abgas vom Abgasaufladungs- und Abgasnachbehandlungsmodul in einem Abgaskamin aufweist.

6. Brennkraftmaschine, insbesondere mit Schweröl betriebene Schiffsdieselbrennkraftmaschine, mit einer Abgasaufladung und mit einer Abgasreinigung über einen SCR-Katalysator, **gekennzeichnet durch** mindestens ein Abgasaufladungs- und Abgasnachbehandlungsmodul (10, 10') nach einem der Ansprüche 1 bis 5.

7. Brennkraftmaschine nach Anspruch 6, **dadurch gekennzeichnet, dass** dieselbe eine einstufige Abgasaufladung umfasst, wobei der Abgasturbolader (11) des oder jedes Abgasaufladungs- und Abgasnachbehandlungsmoduls (10, 10') die einstufige Abgasaufladung bereitstellt, wobei der Anschluss (14) zum Zuführen von zu entspannendem Abgas in das jeweilige Abgasaufladungs- und Abgasnachbehandlungsmodul (10, 10') unmittelbar mit einem Abgassammler der Brennkraftmaschine koppelbar ist, und wobei der Anschluss (17) zum Abführen von verdichteter Ladeluft vom jeweiligen Abgasaufladungs- und Abgasnachbehandlungsmodul (10, 10') unmittelbar mit einem Ladeluftsammler der Brennkraftmaschine koppelbar ist.

8. Brennkraftmaschine nach Anspruch 6, **dadurch gekennzeichnet, dass** dieselbe eine zweitstufige Abgasaufladung umfasst, wobei der Abgasturbolader (11) des oder jedes Abgasaufladungs- und Abgasnachbehandlungsmoduls (10, 10') eine Niederdruckstufe der Abgasaufladung bereitstellt, wobei der Anschluss (14) zum Zuführen von zu entspannendem Abgas in das jeweilige Abgasaufladungs- und Abgasnachbehandlungsmodul (10, 10') mittelbar über eine Turbine (27) eines eine Hockdruckstufe der Abgasaufladung bereitstellenden Abgasturboladers (25) mit einem Abgassammler der Brennkraftmaschine koppelbar ist, und wobei der Anschluss (17) zum Abführen von verdichteter Ladeluft vom jeweiligen Abgasaufladungs- und Abgasnachbehandlungsmodul (10, 10') mittelbar über einen Verdichter (26) des die Hockdruckstufe der Abgasaufladung bereitstellenden Abgasturboladers (25) mit einem Ladeluftsammler der Brennkraftmaschine koppelbar ist.

9. Brennkraftmaschine nach einem der Ansprüche 6 bis 8, **dadurch gekennzeichnet, dass** dieselbe in R-Bauweise ausgeführt ist und ein einziges Abgasaufladungs- und Abgasnachbehandlungsmodul (10, 10') umfasst.

10. Brennkraftmaschine nach einem der Ansprüche 6 bis 8, **dadurch gekennzeichnet, dass** dieselbe in V-Bauweise mit zwei Zylinderbänken (23, 24) ausgeführt ist und je Zylinderbank ein Abgasaufladungs- und Abgasnachbehandlungsmodul (10, 10') umfasst.
